# EUROPEAN PATENT SPECIFICATION

(11) **EP 2 849 560 B1**
(45) Date of publication and mention of the grant of the patent: **15.11.2023**
(21) Application number: 13782828.1
(22) Date of filing: 15.05.2013
(51) Int. Cl.: A01K 73/02, G01S 15/08, G01S 7/00, G01S 15/96

(54) **TRAWL HEIGHT INDICATOR**
HÖHENINDIKATOR FÜR SCHLEPPNETZ
INDICATEUR DE HAUTEUR DE CHALUT

(30) Priority: 16.05.2012 NO 20120577
(43) Date of publication of application: 25.03.2015
(73) Proprietor: Scantrawl a.s., 3167 Åsgårdstrand (NO)
(72) Inventor: SKJOLD-LARSEN, Henning, 3167 Åsgårdstrand (NO)
(74) Representative: Onsagers AS
(86) International application number: PCT/IB2013/053966
(87) International publication number: WO 2013/171688

(56) References cited:
- WO-A1-2005/055709
- GB-A- 1 318 537
- GB-A- 1 342 969
- US-A1- 2004 013 471

## Description

The invention relates to a system and a method for monitoring the height of fishing gear above the bottom during a fishing operation.

There is an ever-growing focus on the damage that trawl gear, such as bottom trawls, can cause to coral reefs and other habitats for fish propagation. At the same time, it is a fact that many species of fish live on the bottom, or just above it. There is therefore a wish to further develop trawl fishing so as to be able to fish using trawls on or close to the bottom without causing damage to the bottom sediments, and a major step in this connection is to find solutions for maintaining the trawl doors at a certain distance from the bottom. An irregular bottom, the presence of many rocks, boulders and other obstacles, and also fishing on slopes makes this difficult, and there is a need, in a simple and inexpensive manner, both to know the height of the trawl doors above the bottom and to identify possible obstacles ahead of the doors.

When fishing is semipelagic and pelagic, close to the bottom, it is desirable to maintain the trawl doors a certain height above the bottom, so that the doors do not hit large rocks and other obstacles on the bottom, and thus sustain damage.

Today, a number of different measuring systems and devices are available for monitoring a trawling process. These include systems for measuring the size of the opening of the trawl, the speed of the trawl relative to the water, the amount of fish caught by the trawl etc. Such information can be transmitted to the operator of the trawl and the trawl winches on the boat, thereby enabling them to take actions to optimise the trawling process.

GB 1318537 describes the use of a forward pointing sonar in order to find a shoal of fish and thus be able to direct/aim the trawl towards the fish in order to increase catch volume. The trawl is maneuvered in such a way that the signal from the sonar indicates that the trawl is aimed on the fish shoal.

NO 32980 describes a method and apparatus to capture marine organisms in the sea using trawls towed by a vessel and described us of sensors that can be located on the top, bottom and sides of the trawl door.

During a trawling operation, the operator or skipper has a limited number of actions he can take to influence the geometry of the trawl in order to optimise the trawling process and thus the result of the fishing operation, for example:
- Change the speed
- Change the length of the trawl wires
- Change the angle of the trawl doors
- Turn

The trawl doors move in the direction of travel of the vessel, with an angle of attack of 30-40° to the direction of travel and varying roll and pitch angle, and it is desirable to be able to obtain information to allow the doors to go as close to the bottom as possible by identifying obstacles at an early stage.

The object of the invention is to provide an apparatus/system and method for monitoring the distance to the seabed for gear during trawling operations, which enable the fisherman to identify obstacles as early as possible and take the right decisions in time. The object is achieved by means of the features set forth in the independent claims.

The embodiments which do not fall within the scope of the claims are present for illustration purposes only.

In an embodiment, a trawl sensor device for monitoring trawl doors and the distance of the trawl to the bottom during trawling operations comprises at least one acoustic transmitter and receiver, the transmitter being adapted to be positioned such that an acoustic signal is transmitted towards the seabed at a forward-pointing angle, and means for communication between the sensor device and a vessel.

The acoustic transmitter and receiver are, in an embodiment, arranged in or at the same position and are constituted of, for example, an echo sounder or other device able to transmit and receive acoustic signals. The communication means for communication between the sensor device and the vessel may be cables, acoustic communication means or other cabled or wireless means for communicating by means of one-way or two-way transmission of signals between the sensor device and the vessel.

The sensor device may basically be a conventional sensor device as, for instance, the SS4 series of sensors produced by Scanmar AS or similar sensor modules. The sensor devices are adapted to be attached to the trawl, the trawl door, the clump or other points at which it is desirable to be able to determine the distance to the seabed.

In an embodiment, the acoustic transmitter is adapted to transmit the acoustic signal at an angle of 5-90 degrees, for example, at an angle of 30 degrees.

The sensor device comprises, in an embodiment, an angle sensor capable of measuring roll and pitch angle of the sensor device or the doors on which the sensor device is mounted; for example, the angle of the sensor device relative to the direction of travel can be determined. In this way, compensation can be made for the angular deviation caused by the position of the gear when determining the angle at which the acoustic signal is transmitted.

In an embodiment, the sensor device comprises a processor unit arranged in the sensor unit itself or on the vessel. There may also be a processor unit both in the sensor unit and on the vessel. A processor unit arranged on the vessel will receive signals from the sensor device and utilise them for different calculations, for example, to calculate the distance between the acoustic transmitter and the seabed based on the difference in time between transmission and reception of the acoustic signal and the forward-pointing angle, to calculate the height between the sensor device and the seabed a distance ahead of the sensor device in the direction of travel, and/or to calculate the height between the lower part of the gear and the seabed a distance ahead of the sensor device in the direction of travel

In an embodiment the sensor device also comprises a GPS unit.

In another embodiment, the sensor device comprises a motor and a rotating mechanism for the purpose of changing the angle of the transmitted acoustic signal. This change can in some embodiments be controlled by an operator or can be calculated by the processor unit.

The invention will now be described with the aid of examples and with reference to the attached drawings.
Figure 1 is a schematic illustration of a trawl under tow by a vessel.
Figure 2 illustrates a trawl door being pulled just above the seabed.
Figure 3 illustrates possible positions on trawling gear in which the invention can be used.

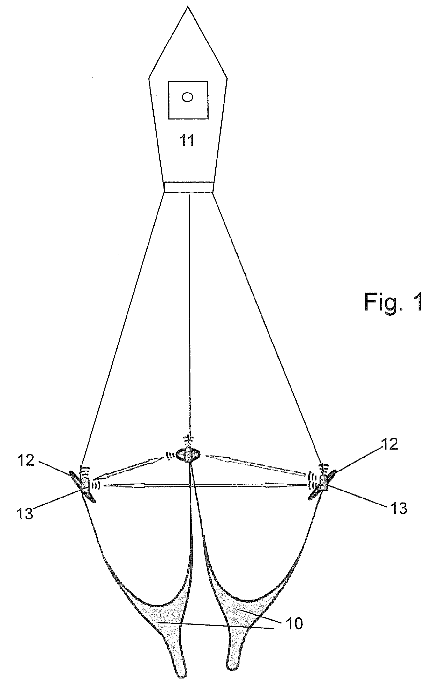

Figure 1 illustrates a trawl 10 that is being towed by a fishing vessel 11. In this illustration a twin trawl is shown, consisting of two trawls 10 linked together, but the principle is the same for one, two or more trawls towed by a vessel. The trawl 10 is spread by two trawl doors 12 that have an angle relative to the direction of travel of the vessel such that the sides of the trawl 10 are drawn apart.

The trawl doors 12 move in the direction of travel of the vessel 11, with an angle of attack of 30-40° to the direction of travel and varying roll and pitch angles. There is in this connection a need to be able to obtain information to allow the doors to go as close to the bottom as possible by identifying obstacles at an early stage. In order to be able to monitor the characteristics of the trawl doors 12, such as distance between them and their angular position, a sensor device 13 is provided on each of the trawl doors. The sensor devices 13 comprise at least measuring sensors, communications equipment and power supply unit. Examples of measuring sensors are distance sensor, angle sensor, depth sensor and temperature sensor. One or more of the measuring sensors can initially be inactive, but can be activated as the need arises to measure different parameters.

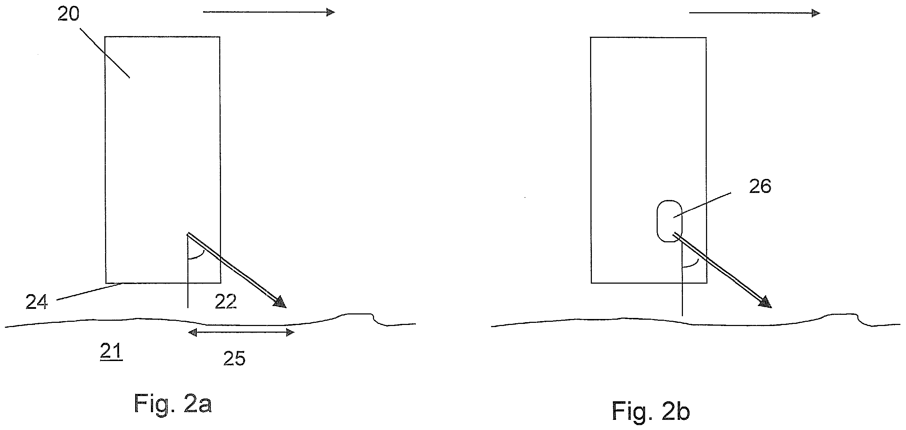

Figures 2a and 2b illustrate a trawl door 20, for example, a trawl door such as that shown in Figure 1, which is moving in the direction of travel indicated by a horizontal arrow. The trawl door has a lower edge 24 that moves a distance above the seabed 21. From a position on the door, an acoustic signal is transmitted towards the seabed. The signal is reflected back to an acoustic receiver arranged at the same position on the door and the distance the signal has covered can then be calculated. The signal is transmitted at an angle 22 relative to the vertical plane in a forward-pointing direction in the direction of travel. When the position from which the signal is transmitted and the angle at which the signal is transmitted are known, the distance between the bottom edge 24 of the trawl door and the seabed 21 can be calculated at a distance 25 ahead of the trawl door by using trigonometry. The angle that is used can in some embodiments be changed so as to be able to vary the distance ahead of the trawl door that is to be measured. The distance that is necessary will depend on desired height above the bottom, the speed of the vessel, anticipated bottom conditions etc.

Figure 2b shows a sensor device 26 that is attached to the trawl door 20 in the same way as in Figure 1. All devices for transmission and reception of the acoustic signal are arranged inside the sensor device, in addition to possible other elements, such as a communications unit, other measuring sensors, power supply etc. In this case, the acoustic signal will be transmitted at a specific angle relative to the sensor device housing, where this angle is known.

The position of the sensor device on the trawl door, both distance to the lower edge and angular position, will be fixed, definite and known. The transmission angle for the acoustic signal will thus also be known and in the same way as described above for Figure 2a, the distance between the lower edge of the trawl door and the seabed will be calculated at a distance ahead of the trawl door.

The calculations can be carried out in a unit connected to the transmitter and receiver arranged close to the position thereof, or can be sent to the vessel where they can be performed in a processor unit, for example, connected to the rest of the vessel's trawl monitoring equipment.

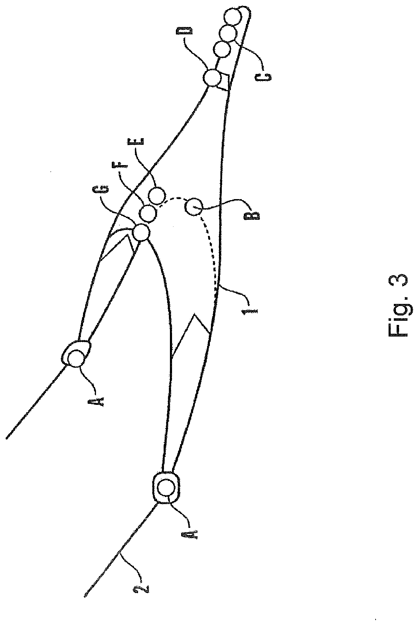

Figure 3 shows possible positions of different sensors on trawl gear, where the sensors A, B and G are suitable positions for use of acoustic signal transmitters.

## Claims

1. Claim Amendments
1. A trawl sensor device for monitoring the distance of trawl doors (20) and a trawl to the seabed (21) during trawling operations, comprising:
- at least one acoustic transmitter and receiver,
**characterised in** the transmitter being adapted to be positioned such that an acoustic signal is transmitted towards the seabed from at least one position on the trawl door at a known forward-pointing angle;
the receiver receiving the acoustic signal reflected from the seabed in at the least one position;
the sensor device further comprising
- a processor unit adapted to calculate the distance travelled by the acoustic signal from the received acoustic signal; and further calculating the distance between the bottom edge of the trawl door and the sea bed from the distance travelled by the acoustic signal and the known forward pointing angle using trigonometry; and
- means for communication between the sensor device and a vessel.

2. A sensor device according to claim 1, wherein the acoustic transmitter and receiver are an echo sounder.

3. A sensor device according to claim 1, comprising an angle sensor capable of measuring roll and pitch angle of the sensor device.

4. A sensor device according to claim 1, comprising a GPS unit.

5. A sensor device according to claim 1, comprising a motor and a rotating mechanism for the purpose of adjusting the angle of the transmitted acoustic signal.

6. A method for monitoring the distance of trawl doors (20) and a trawl to the seabed (21) during trawling operations, **characterised in** :
transmitting an acoustic signal towards the seabed from at least one position on the trawl door, at a known forward-pointing angle;
receiving the acoustic signal reflected from the seabed in the at least one position;
calculating the distance travelled by the acoustic signal from the received acoustic signal;
calculating the distance between the bottom edge of the trawl door and the sea bed from the distance travelled by the acoustic signal and the known forward pointing angle using trigonometry; and
- transmitting the calculated distance from the sensor device to a vessel.

7. A method according to claim 6, wherein the acoustic signal is transmitted and received from a sensor device and wherein the method comprises measuring roll and pitch angle for the sensor device.

8. A method according to claim 6, comprising the step of carrying out global positioning using a GPS unit.

## Patentansprüche

1. Schleppnetz-Sensorvorrichtung zur Überwachung der Entfernung von Schleppnetztüren (20) und einem Schleppnetz zum Meeresgrund (21) während des Schleppnetzbetriebs, umfassend:
- wenigstens einen akustischen Sender und Empfänger,
**dadurch gekennzeichnet, dass** der Sender dafür eingerichtet ist, so positioniert zu werden, dass ein akustisches Signal von wenigstens einer Position an der Schleppnetztür in einem bekannten nach vorne zeigenden Winkel in Richtung des Meeresgrunds gesendet wird;
wobei der Empfänger das vom Meeresgrund reflektierte akustische Signal an der mindestens einen Position empfängt; wobei die Sensorvorrichtung ferner Folgendes umfasst:
- eine Prozessoreinheit, die dafür eingerichtet ist, aus dem empfangenen akustischen Signal die von dem akustischen Signal zurückgelegte Entfernung zu berechnen und ferner unter Verwendung von Trigonometrie aus der von dem akustischen Signal zurückgelegten Entfernung und dem bekannten nach vorne zeigenden Winkel die Entfernung zwischen der Unterkante der Schleppnetztür und dem Meeresgrund zu berechnen; und
- Mittel zur Kommunikation zwischen der Sensorvorrichtung und einem Schiff.

2. Sensorvorrichtung nach Anspruch 1, wobei der akustische Sender und Empfänger ein Echolot sind.

3. Sensorvorrichtung nach Anspruch 1, umfassend einen Winkelsensor, der imstande ist, den Roll- und Nickwinkel der Sensorvorrichtung zu messen.

4. Sensorvorrichtung nach Anspruch 1, umfassend eine GPS-Einheit.

5. Sensorvorrichtung nach Anspruch 1, umfassend einen Motor und einen Drehmechanismus zum Zweck der Einstellung des Winkels des gesendeten akustischen Signals.

6. Verfahren zur Überwachung der Entfernung von Schleppnetztüren (20) und einem Schleppnetz zum Meeresgrund (21) während des Schleppnetzbetriebs, **gekennzeichnet durch**:
- das Senden eines akustischen Signals von wenigstens einer Position an der Schleppnetztür in einem bekannten nach vorne zeigenden Winkel in Richtung des Meeresgrunds;
- Empfangen des vom Meeresgrund reflektierten akustischen Signals an der wenigstens einen Position;
- Berechnen der von dem akustischen Signal zurückgelegten Entfernung aus dem empfangenen akustischen Signal;
- Berechnen der Entfernung zwischen der Unterkante der Schleppnetztür und dem Meeresgrund aus der von dem akustischen Signal zurückgelegten Entfernung und dem bekannten nach vorne zeigenden Winkel unter Verwendung von Trigonometrie; und
- Senden der berechneten Entfernung von der Sensorvorrichtung an ein Schiff.

7. Verfahren nach Anspruch 6, wobei das akustische Signal von einer Sensorvorrichtung gesendet und empfangen wird und wobei das Verfahren das Messen des Roll- und Nickwinkels für die Sensorvorrichtung umfasst.

8. Verfahren nach Anspruch 6, umfassend den Schritt des Durchführens einer globalen Positionierung unter Verwendung einer GPS-Einheit.

## Revendications

1. Dispositif de capteur de chalut pour contrôler la distance de portes de chalut (20) et d'un chalut par rapport au fond marin (21) pendant des opérations de chalutage, comprenant :
- au moins un émetteur et un récepteur acoustiques,
**caractérisé en ce que** l'émetteur est conçu pour être positionné de sorte qu'un signal acoustique est émis en direction du fond marin à partir d'au moins une position sur la porte de chalut selon un angle de pointage vers l'avant connu ;
le récepteur recevant le signal acoustique réfléchi à partir du fond marin dans l'au moins une position ;
le dispositif de capteur comprenant en outre
- une unité de processeur conçue pour calculer la distance parcourue par le signal acoustique à partir du signal acoustique reçu ; et calculant en outre la distance entre le bord inférieur de la porte de chalut et le fond marin à partir de la distance parcourue par le signal acoustique et l'angle de pointage vers l'avant connu en utilisant la trigonométrie ; et
- des moyens pour une communication entre le dispositif de capteur et un navire.

2. Dispositif de capteur selon la revendication 1, dans lequel l'émetteur et le récepteur acoustiques sont un échosondeur.

3. Dispositif de capteur selon la revendication 1, comprenant un capteur d'angle apte à mesurer un angle de roulis et de pas du dispositif de capteur.

4. Dispositif de capteur selon la revendication 1, comprenant une unité de GPS.

5. Dispositif de capteur selon la revendication 1, comprenant un moteur et un mécanisme rotatif destiné à régler l'angle du signal acoustique émis.

6. Procédé de contrôle de la distance de portes de chalut (20) et d'un chalut par rapport au fond marin (21) pendant des opérations de chalutage, **caractérisé par** :
l'émission d'un signal acoustique en direction du fond marin à partir d'au moins une position sur la porte de chalut, selon un angle de pointage vers l'avant connu ;
la réception du signal acoustique réfléchi à partir du fond marin dans l'au moins une position ;
le calcul de la distance parcourue par le signal acoustique à partir du signal acoustique reçu ;
le calcul de la distance entre le bord inférieur de la porte de chalut et le fond marin à partir de la distance parcourue par le signal acoustique et l'angle de pointage vers l'avant connu en utilisant la trigonométrie ; et
l'émission de la distance calculée à partir du dispositif de capteur vers un navire.

7. Procédé selon la revendication 6, dans lequel le signal acoustique est émis et reçu à partir d'un dispositif de capteur et dans lequel le procédé comprend la mesure d'un angle de roulis et de pas pour le dispositif de capteur.

8. Procédé selon la revendication 6, comprenant l'étape de mise en oeuvre d'un positionnement global au moyen d'une unité de GPS.
